# EUROPEAN PATENT APPLICATION

(11) **EP 0 666 030 A1**
(43) Date of publication of application: **09.08.1995**
(21) Application number: 95300392.8
(22) Date of filing: 23.01.1995
(51) Int. Cl.: A23B 4/32

(54) **Meat curing**

(30) Priority: 04.02.1994 GB 9402183
(71) Applicant: J. SAINSBURY PLC, London SE1 9LL (GB)
(72) Inventor: Weal, Richard Charles, West Sussex BN43 5WY (GB)
(74) Representative: Palmer, Roger

(57) **Abstract**

Apparatus for dry curing meat comprises a slicer 13 followed by a curing salt distributor 17 for distributing curing salt in dry form over successive slices which are then stacked and sealed into a sealed package 21 at a packing station 22.

## Description

The invention relates to curing of meat such as pork or other meats such as turkey or pastrami by application of curing salt.

It is well known to cure meat by curing with applied salt. A common usage is to produce bacon where pork is treated with curing salt which in this case normally consists of sodium chloride together with a small proportion of sodium or potassium nitrite. Known processes include both dry curing and wet curing. In dry curing the exterior of a large piece of meat, prior to slicing, is rubbed with a dry salt mixture as aforesaid and the process may take as long as fourteen days or more with the exterior application and rubbing with salt being repeated at intervals for a few days. The process is labour intensive and requires substantial time to complete the process as the curing process has to work into the body of the meat from the outer surface where the salt mix is applied. More recently a wet curing process has been commonly used in which a wet mixture of water and a salt mixture as aforesaid is injected into a large piece of meat by use of a multi-needle array. The wet injection reaches the interior of the meat by insertion of the needle into the meat and the curing is achieved much quicker, such as for example, after five days. In both the aforementioned dry and wet curing processes the curing process is carried on a piece or joint of meat of substantial size and the meat is cut to the required size such as slices of bacon, after the curing process is completed.

It is an object of the present invention to provide an improved process for curing meat. It is a further object to provide an improved method of packing meat for consumption in a cured condition.

In this specification the term "curing salt" is used for a mixture of edible salt used for curing meat and includes a mixture of sodium chloride with sodium or potassium nitrite.

The invention provides a method of dry curing meat comprising cutting a piece of meat into a succession of thin slices, applying curing salt over a surface of each slice after cutting, stacking these slices face to face with the salt applied, packing the stacked slices and storing the package to effect curing by the curing salt in the package.

Preferably the salt is sprinkled to form an even distribution over one face of each slice.

Preferably the curing salt is applied to only one face of each slice and successive slices are stacked with said one face adjacent an unsalted face of an adjacent slice.

Preferably the packing comprises a vacuum packing step. Preferably the meat is chilled before cutting to form slices.

The invention also provides a method of packing sliced meat into sealed packets comprising slicing meat to form a succession of slices, applying curing salt in dry form to a surface of each slice, forming a stack of salted slices lying face to face and sealing said stack of slices into a sealed package.

Said meat may comprise pork in which case the curing is effected to produce bacon.

Preferably the curing salt comprises a mixture of sodium or potassium chloride with a nitrite.

Preferably between 1 and 5 grams of curing salt are applied to each 100 grams of sliced meat.

The invention includes apparatus for dry curing meat comprising a slicing machine for slicing a piece of meat into a succession of slices, a curing salt distributor for distributing curing salt in powder form over a surface of each successive slice, a stacking device for stacking successive slices face to face with each other after application of curing salt and a packing station for packing a stack of slices into a sealed package.

Preferably the curing salt distributor is arranged to apply salt to only one face of each slice and said stacking device is arranged to stack successive slices with a salted face of each slice adjacent an unsalted face of an adjacent slice.

Preferably the curing salt distributor comprises a gravity fed hopper. Preferably the packing station comprises a vacuum packer. Preferably a chiller is positioned upstream of said slicing machine for chilling the meat prior to slicing.

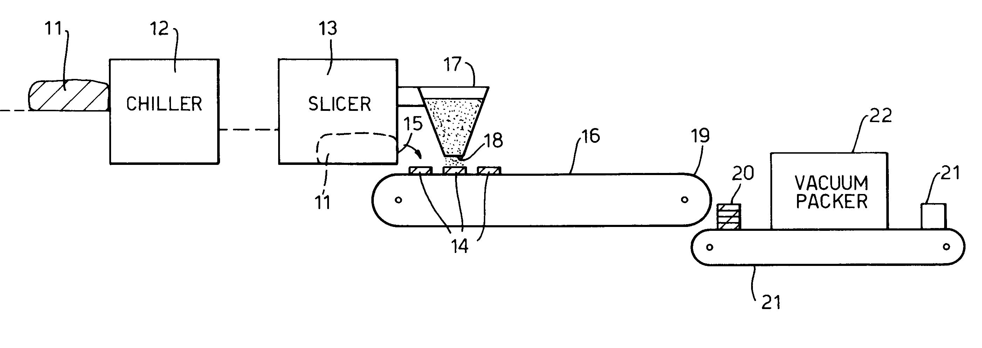

One embodiment of the invention will now be described by way of example and with reference to the accompanying drawing which shows schematically a side elevation of a meat curing and packing system.

This example relates to curing pork to form bacon. A large piece of pork such as a pork primal cut 11 is first input to a chiller unit 12 where the temperature of the meat is cooled, for example, to -3°C, in order to stiffen the meat prior to slicing into slices suitable for bacon. After chilling the pork 11 is conveyed to a slicer 13 of conventional structure. The pork 11 is progressively moved through the slicer past a slicing blade so that a succession of slices 14 pass out of an outlet 15 of the slicer 13 onto a conveyor 16. The slices 14 are conveyed in succession below a hopper 17 containing curing salt. The hopper 17, mounted on a casing of the slicer 13, is a gravity feed hopper having an outlet 18 which extends in a transverse line across the conveyor 16 and is arranged to distribute the curing salt in an even distribution of dry salt across the full surface of each slice 14 as it passes below the outlet 18 on the conveyor 16. The conveyor 16 is arranged to move continuously so as to transport the slices 14 to a discharge end 19 where the slices are stacked one on top of each other to form a pile 20 on a conveyor 21 of a packing station 22. The packing station 22 is a conventional vacuum packing station arranged to take successive stacks 20 of slices 14 and to pack them in sealed evacuated packages 21.

In this example the hopper 17 contains dry salt in powder or fine crystalline form consisting of sodium chloride mixed with sodium nitrite. The composition of the mixture in this example consists of 8 grams of sodium nitrite to every 1000 grams of sodium chloride. The hopper outlet 18 has an adjustable orifice to control the rate of distribution of dry salt onto the slices 14 and in this example the orifice is arranged to be varied to control the discharge of curing salt to provide between 1 and 5 grams of salt mixture for every 100 grams of sliced meat passing below the hopper 17.

As the hopper provides a gravity feed onto the top surface only of each slice 14 the slices move along the conveyor 16 coated evenly with salt over their entire area on one surface only. The slices are stacked into a pile 20 such that an unsalted face of one slice lies adjacent a salted face of the next slice. The vacuum packer is arranged to pack and seal the stacks of slices in quick succession as fast as the meat is sliced by the slicer 13 and coated by the salt from the hopper 17. In this way the packages 21 leaving the vacuum packer comprise stacks of thinly sliced pork coated with salt between each pair of slices. At the time of packing the meat is still pork which has not yet been cured. The packages are then stored and curing takes place inside the package. Due to the even distribution of salt over the full face of a thin slice 14 the dry salt nevertheless cures the meat much more quickly than was the case with prior art methods of dry curing where the curing had to take place throughout the thickness of an entire piece of meat when salt was applied only to the external surface.

Although the above example relates to curing pork to form bacon other meats may be sliced and cured in accordance with the above example. For instance, turkey or pastrami are other suitable meats which may be cured in the aforementioned manner.

It will be appreciated that the example described provides the advantage of a dry cured meat which avoids the disadvantages of wet curing and the introduction of unwanted moisture in the meat which may cause unwanted emission from the meat when subsequently cooked. Furthermore it avoids any additional labour during the curing process as it is not necessary to reapply salt after the initial application. Furthermore the time taken to produce the cured product is substantially reduced compared with prior art dry curing processes.

## Claims

1. A method of dry curing meat comprising cutting a piece of meat into a succession of thin slices, applying curing salt over a surface of each slice after cutting, stacking these slices face to face with the salt applied, packing the stacked slices and storing the package to effect curing by the curing salt in the package.

2. A method according to claim 1 in which the salt is sprinkled to form an even distribution over one face of each slice.

3. A method according to claim 1 or claim 2 in which the curing salt is applied to only one face of each slice and successive slices are stacked with said one face adjacent an unsalted face of an adjacent slice.

4. A method according to any one of claims 1 to 3 in which the packing comprises a vacuum packing step.

5. A method according to any one of claims 1 to 4 in which the meat is chilled before cutting to form slices.

6. A method of packing sliced meat into sealed packets comprising slicing meat to form a succession of slices, applying curing salt in dry form to a surface of each slice, forming a stack of salted slices lying face to face and sealing said stack of slices into a sealed package.

7. A method according to any one of claims 1 to 6 in which said meat comprises pork and the curing is effected to produce bacon.

8. A method according to any one of claims 1 to 7 in which the curing salt comprises a mixture of sodium or potassium chloride with a nitrite.

9. A method according to any one of claims 1 to 8 in which between 1 and 5 grams of curing salt are applied to each 100 grams of sliced meat.

10. A sealed package of dry cured slices of meat said slices being cured by a method according to any one of claims 1 to 9.

11. Apparatus for dry curing meat comprising a slicing machine for slicing a piece of meat into a succession of slices, a curing salt distributor for distributing curing salt in dry form over a surface of each successive slice, a stacking device for stacking successive slices face to face with each other after application of curing salt and a packing station for packing a stack of slices into a sealed package.

12. Apparatus according to claim 11 in which the curing salt distributor is arranged to apply salt to only one face of each slice and said stacking device is arranged to stack successive slices with a salted face of each slice adjacent an unsalted face of an adjacent slice.

13. Apparatus according to claim 12 in which curing salt distributor comprises a gravity fed hopper.

14. Apparatus according to any one of claims 11 to 13 in which a chiller is positioned upstream of said slicing machine for chilling the meat prior to slicing.
